# EUROPÄISCHE PATENTANMELDUNG

(11) **EP 4 843 922 A1**
(43) Veröffentlichungstag der Anmeldung: **25.11.2026**
(21) Anmeldenummer: 26179114.9
(22) Anmeldetag: 18.05.2026
(51) Int. Cl.: B65F 7/00, A47K 1/02, A47K 5/12, B60R 15/02, B65F 3/00

(54) **HYGIENEEINRICHTUNG**

(30) Priorität: 21.05.2025 DE 102025119683
(71) Anmelder: FAUN Umwelttechnik GmbH & Co. KG, 27711 Osterholz-Scharmbeck (DE)
(72) Erfinder: Knüfermann, Peter, 46483 Wesel (DE); Koschnitzki, Nils, 27729 Lübberstedt (DE)
(74) Vertreter: Regler, Markus Egid

(57) **Zusammenfassung**

Die Erfindung betrifft eine Hygieneeinrichtung (1) umfassend einen Rahmen (10) mit einer Deckwand (11), einer Bodenwand (12), einer Rückwand (13) und diese verbindende Seitenwände (14), ein Schiebfach (4) mit einem Boden (15) und von diesem nach oben abstehender Frontwand (16) und Seitenflächen (17), das in einem Stauzustand in dem Rahmen (10) angeordnet ist und in einem Nutzungszustand aus dem Rahmen (10) ausgezogen ist, mit einem in dem Schiebfach (4) angeordneten Träger (5) mit einem Wasserreservoir (9) und zumindest einer Aufnahme für Hygieneelemente (6,7,8), der klappbar in dem Schiebfach (4) angeordnet ist, so dass der Träger (5) in dem Stauzustand in einem Innenraum des Schiebfachs (4) angeordnet ist und in dem Nutzungszustand nach oben geklappt ist.

Die Erfindung ermöglicht eine komfortable Handreinigung und ist dabei platzsparend und kompakt gestaltet.

## Beschreibung

Die Erfindung betrifft eine Hygieneeinrichtung mit den Merkmalen von Anspruch 1 sowie ein Abfallsammelfahrzeug mit einer derartigen Hygieneeinrichtung.

Das Arbeitspersonal von Nutzfahrzeugen, insbesondere von Abfallsammelfahrzeugen, ist bei der Arbeit einer erhöhten Belastung durch Schmutz, Keime und auch Giftstoffe ausgesetzt. Es existieren daher Vorgaben für Schutzmaßnahmen zur Reduzierung der Gesundheitsgefährdung des Arbeitspersonals. Dabei ist unter anderem vorgesehen, dass Einrichtungen zur hygienischen Handreinigung zur Verfügung zu stellen sind.

Eine Möglichkeit, diese Vorgaben zu erfüllen, besteht darin, reinigende und desinfizierende Feuchttücher bereitzustellen. Nachteilig sind der dabei entstehende Abfall und die Gefahr von Hautreizungen und allergischen Reaktionen durch Bestandteile der Tücher.

Alternativ können Seife, Wasser und Einmalhandtücher bereitgestellt werden, die zumeist je nach Verfügbarkeit von Stauraum in Staukästen oder in der Fahrerkabine untergebracht werden und ihrerseits verschmutzen können.

Es ist die Aufgabe der Erfindung eine platzsparende, kompakte und komfortable Hygieneeinrichtung bereitzustellen.

Diese Aufgabe wird gelöst durch eine Hygieneeinrichtung mit den Merkmalen von Anspruch 1. Die Aufgabe wird ebenfalls gelöst durch ein Abfallsammelfahrzeug gemäß Anspruch 15. Vorteilhafte Weiterbildungen sind Gegenstand der abhängigen Ansprüche.

Die Erfindung betrifft eine Hygieneeinrichtung umfassend einen Rahmen mit einer Deckwand, einer Bodenwand, einer Rückwand und diese verbindende Seitenwände, ein Schiebfach mit einem Boden und von diesem nach oben abstehenden Frontwand und Seitenflächen, das in einem Stauzustand in dem Rahmen angeordnet ist und in einem Nutzungszustand aus dem Rahmen ausgezogen ist, mit einem in dem Schiebfach angeordneten Träger mit einem Wasserreservoir und zumindest einer Aufnahme für Hygieneelemente, der klappbar in dem Schiebfach angeordnet ist, so dass der Träger in dem Stauzustand in einem Innenraum des Schiebfachs angeordnet ist und in dem Nutzungszustand nach oben geklappt ist.

Die Hygieneeinrichtung wird bevorzugt an einem oder mehreren Trägern des Unterbaus eines Nutzfahrzeuges, insbesondere Abfallsammelfahrzeuges, montiert.

Die Hygieneeinrichtung ist schubladenartig ausgestaltet. Das Schiebfach ist aus dem Rahmen, der die äußere Hülle der Hygieneeinrichtung bildet, ausziehbar. Zu diesem Zweck sind zwischen den Seitenwänden und Seitenflächen Schienen angeordnet.

Der Träger kann ein oder mehrere Hygieneelemente, beispielsweise einen Seifenspender, einen Handtuchspender oder einen Spender für Desinfektionsmittel aufnehmen. Damit sind die für eine hygienische Handreinigung notwendigen Mittel vorhanden und im Stauzustand kompakt und platzsparend im Innenraum des Schiebfachs untergebracht. Zur Benutzung wird der Träger aus dem Schiebfach herausgeklappt, so dass er aufrecht steht, so dass die Spender und das Wasserreservoir komfortabel genutzt werden können.

Wasserreservoir und Hygieneelemente sind vorzugsweise entnehmbar beziehungsweise austauschbar, so dass verbrauchte Artikel unkompliziert nachgefüllt oder ersetzt werden können. Es können auch dermatologische Bedarfe des Bedienpersonals unproblematisch berücksichtigt werden, indem die passenden Hygieneelemente ausgewählt werden.

Das Wasserreservoir verfügt über einen Hahn, so dass Wasser daraus entnommen werden kann.

Das Wasserreservoir kann temperiert seine, beispielsweise über einen darin angeordneten Heizstab, der beispielsweise durch einen Verschlussdeckel des Wasserreservoirs geführt sein kann. Damit wird ein Einfrieren des Wassers bei Temperaturen unter dem Gefrierpunkt vermieden und dem Bedienpersonal wird eine angenehme Handreinigung ermöglicht.

Nach der Nutzung wird der Träger wieder zurück in das Schiebfach geklappt und dieses in den Rahmen eingeschoben. Der Platzbedarf der Hygieneeinrichtung ist damit minimiert und sie kann in einfacher Weise auch an Fahrzeugen mit eingeschränkten Platzverhältnissen montiert werden. Vorteilhafterweise kann dann auch Platz genutzt werden, der regelmäßig als Bauraum ungenutzt ist.

Vorteilhafterweise ist der Boden des Schiebfachs geformt, um eine erste Auffangwanne zu bilden. Das aus dem Wasserreservoir entnommene Wasser rinnt in das als Auffangwanne ausgestaltete Schiebfach, das vorzugsweise so geformt ist, dass das Wasser nach hinten abläuft. Auch dies verbessert den Komfort der Handreinigung, da die Bedienperson bei der Wasserentnahme nicht auf Verunreinigung oder Durchnässung ihrer Kleidung durch Schmutzwasser achten muss.

Eine vorteilhafte Weiterbildung der Erfindung sieht vor, dass der Boden des Schiebfachs an seiner Vorderkante aufgebogen ist. Dies hat die Wirkung, dass das Schmutzwasser nicht nach vorne, also auf die Bedienperson zu, ablaufen kann. Besonders bevorzugt ist die aufgebogene Vorderkante mit einem Dichtgummi versehen.

In einer weiteren vorteilhaften Weiterbildung der Erfindung ist die hintere Wand des Schiebfachs als vom Boden abgebogene Lasche ausgebildet, und das Schiebfach weist in der Lasche benachbart zum Boden und/oder im Boden benachbart zur Lasche Ausnehmungen auf. Durch die Ausnehmungen kann das Schmutzwasser nach hinten aus dem Schiebfach ablaufen.

Um das Ablaufen zu unterstützen kann der Boden zusätzlich gekantet oder anderweitig geformt sein, um das Schmutzwasser zu leiten. Der Boden kann zudem nach hinten abfallend ausgestaltet sein. Eine eingeformte Kante sorgt zudem für zusätzliche Stabilität.

Eine weitere Ausgestaltung der Erfindung sieht vor, dass eine Frontwand des Schiebfachs klappbar ist, um den Innenraum des Schiebfachs zu vergrößern. Die der Bedienperson zugewandte Frontwand wird nach außen geklappt. Sie kann dafür an ihrer Außenseite einen Griff aufweisen. Dadurch wird der Eingriff in den Innenraum zur Handreinigung für den Benutzer erleichtert. Die Unterkante der Frontwand kann mit einer Dichtung versehen sein, um ein Austreten von Schmutzwasser zwischen der Frontwand und dem Boden zu vermeiden.

Weiterhin kann die Frontwand Seitenschwingen aufweisen, die von der Frontwand zu den Seitenflächen weisend vorstehen. Die Seitenschwingen und die Seitenflächen überlappen sich, damit zwischen ihnen kein Spalt entsteht. Um den Klappvorgang der Frontwand zu führen sind in den Seitenschwingen bogenförmige Langlöcher vorgesehen, die von dazu passenden an den Seitenflächen vorgesehenen Führungselementen, zum Beispiel Schrauben oder Bolzen, durchgriffen sind. Die Enden der Langlöcher dienen gleichzeitig als Anschlag, so dass die Frontwand von den Führungselementen im geöffneten Zustand gehalten wird.

In einer weiteren vorteilhaften Weiterbildung der Erfindung ist die Bodenwand des Rahmens geformt, um eine zweite Auffangwanne zu bilden. Auch hier ist die zweite Auffangwanne so ausgestaltet, dass das Schmutzwasser nach hinten weg von der Bedienperson abgeführt wird. Dies wird zum Beispiel erreicht, indem die Bodenwand nach hinten abfallend ausgestaltet ist. Zusätzlich oder alternativ kann die Bodenwand gekantet oder geformt sein. Zum Beispiel kann eine schräg oder diagonal nach hinten verlaufende Kantung vorgesehen sein, die zudem für zusätzliche Stabilität sorgt. Weiterhin kann im Bereich der Rückwand eine Senke eingeformt sein.

Weiterhin bevorzugt ist vorgesehen, dass der Rahmen im Bereich der Rückwand in der Bodenwand oder in der Rückwand oder in einer Seitenwand einen Ablauf aufweist. Bei dem Ablauf kann es sich um eine Öffnung in der Bodenwand oder in der Rückwand oder in einer Seitenwand handeln. Diese kann auch mit einem Ablaufrohr versehen sein. Dadurch wird das bei der Handreinigung entstehende Schmutzwasser in den Bereich unter dem Fahrzeug abgeleitet. Damit wird eine Verunreinigung oder Durchnässung der Kleidung des Bedienpersonals vermieden. Bei staubigem oder erdigem Untergrund bildet sich durch das abgelaufene Schmutzwasser Schlamm nur an einer Stelle, an der er nicht stört.

Besonders bevorzugt wirken die erste Auffangwanne und die zweite Auffangwanne zusammen, um Abwasser aufzufangen. Beide Auffangwannen bilden nach dem Ausziehen des Schiebfachs gewissermaßen ein gemeinsames Becken, in dem das Schmutzwasser ablaufen kann. Es fließt von der ersten Auffangwanne in die zweite Auffangwanne und wird von dort vorteilhafterweise nach außen abgegeben. Durch das Ineinanderschieben der beiden Auffangwannen wird der Platzbedarf für die Hygieneeinrichtung kompakt gehalten.

Bevorzugt ist zwischen der Bodenwand des Rahmens und dem Boden des Schiebfachs eine Dichtung angeordnet, die sich zumindest abschnittsweise zwischen die Seitenwände des Rahmens und die Seitenflächen des Schiebfachs erstreckt. Die Dichtung ist weiterhin bevorzugt im Bereich der Vorderkante der Bodenwand angeordnet. Sie verhindert, dass Schmutzwasser durch einen Spalt zwischen Rahmen und Schiebfach nach vorne ablaufen kann.

Vorteilhafterweise weisen die Seitenwände und Seitenflächen Verriegelungslöcher auf, die im Stauzustand fluchtend zueinander sind. Damit sich im Stauzustand Rahmen und Schiebfach nicht durch Fahrzeugbewegungen gegeneinander verschieben ist eine Verriegelung vorgesehen. Dabei wird ein Splint oder Bolzen durch die fluchtenden Verriegelungslöcher geschoben. Splint oder Bolzen können zusätzlich gegen Herausrutschen gesichert sein. Die Verriegelungslöcher können auf einer Seite oder auf beiden Seiten der Hygieneeinrichtung vorgesehen sein. Die Gefährdung von anderen Verkehrsteilnehmern durch ein herausrutschendes Schiebfach oder Beschädigungen der Hygieneeinrichtung durch Stöße werden vermieden.

Weiterhin können die Seitenschwingen der Frontwand Verriegelungslöcher aufweisen, die im Stauzustand mit den Verriegelungslöchern der Seitenwände und Seitenflächen fluchtend sind. Dann kann zusätzlich ein unerwünschtes Herausklappen der Frontwand vermieden werden.

In einer vorteilhaften Weiterbildung der Erfindung weist der Träger einen Hauptkörper und eine Hebelanordnung, um den Träger vom Stauzustand in den Nutzungszustand zu klappen, auf. Die Hebelanordnung ist dabei vorteilhafterweise so ausgestaltet, dass neben der Klappbewegung auch eine Hubbewegung des Hauptkörpers ausgeführt wird. Dadurch wird im Nutzungszustand Platz unterhalb des Hauptkörpers und damit dem Wasserreservoir geschaffen, so dass die Handreinigung bequem durchgeführt werden kann.

Weiterhin ist vorgesehen, dass der Hauptkörper als einstückiges, gebogenes Blechbauteil ausgestaltet ist. Dies ermöglicht eine einfache und kostengünstige Herstellung der Hygieneeinrichtung durch einfache Umformoperationen eines zuvor zugeschnittenen Blechstücks.

Bevorzugt weist der Hauptkörper ein Rückenelement und davon abgebogene Seitenelemente auf. An den Innenseiten der Seitenelemente können die Aufnahmen für Hygieneelemente angebracht, beispielsweise angeschraubt oder angeschweißt, werden. Gleichermaßen dienen die Seitenelemente der Anbindung der Hebelanordnung.

Weiterhin bevorzugt weist der Träger zumindest eine von dem Rückenelement abgebogene Trägerfläche, insbesondere für das Wasserreservoir, auf. Die Trägerfläche wird durch eine einfache Umformoperation gebildet.

Weiterhin kann das Rückenelement des Hauptkörpers Ausnehmungen aufweisen. Dadurch wird das Gewicht reduziert.

Weiterhin kann vorgesehen sein, dass der Träger einen Handgriff aufweist. Dieser erleichtert das Klappen des Trägers vom Stauzustand in den Nutzungszustand und zurück.

Eine weitere vorteilhafte Ausgestaltung der Erfindung sieht vor, dass die Hebelanordnung zumindest einen geraden ersten Hebel und einen gebogenen zweiten Hebel aufweist, die drehbar jeweils an einer Seitenfläche und an dem Hauptkörper angeordnet sind. Bevorzugt ist jeweils ein erster und ein zweiter Hebel an der rechten und linken Seite des Hauptkörpers angeordnet. Im Weiteren wird zur Vereinfachung jeweils nur ein Hebelpaar beschrieben. Unter einem gebogenen Hebel ist zu verstehen, dass dieser keinen geraden Verlauf aufweist, er muss nicht zwingend einer Biegeoperation unterzogen worden sein. Der Radius der Biegung kann insbesondere sehr klein sein, so dass der Hebel zwei geradlinige Abschnitte aufweist, die zueinander geknickt sind.

Vorzugsweise sind die Hebel an von einem Rückenelement des Hauptkörpers abgebogenen Seitenelementen angeordnet.

Der gerade erste Hebel überstreicht beim Klappen des Trägers vom Stauzustand in den Nutzungszustand einen Kreissektor und bringt dabei den Träger nicht nur in eine aufrechte Position, sondern bringt ihn auch in einen Abstand zu dem Schiebfach. Die Länge des ersten Hebels ist dabei so gewählt, dass unterhalb des Hauptkörpers und insbesondere des Wasserreservoirs genügend Platz vorhanden ist, um die Handreinigung bequem durchzuführen.

Der gebogene zweite Hebel unterstützt während des Klappens die Rotation des Hauptkörpers um den Anbindungspunkt des ersten Hebels an dem Hauptkörper nach vorne und stützt den Träger im Nutzungszustand nach hinten ab.

Um diese Bewegungen zu ermöglichen, liegt in einer weiteren Ausgestaltung der Erfindung im Nutzungszustand bezogen auf Blickrichtung von einer Frontseite der Hygieneeinrichtung der Anbindungspunkt des zweiten Hebels an der Seitenfläche oberhalb und hinter dem Anbindungspunkt des ersten Hebels und der Anbindungspunkt des zweiten Hebels an dem Hauptkörper oberhalb und vor dem Anbindungspunkt des ersten Hebels.

In einer vorteilhaften Fortbildung der Erfindung ist vorgesehen, dass der erste Hebel einen über seinen Anbindungspunkt an dem Hauptkörper hinausragenden Anschlagsabschnitt aufweist, mit dem im Nutzungszustand ein Endabschnitt des zweiten Hebels in Anlage kommt. Dadurch wird die Bewegung der beiden Hebel zueinander gestoppt und eine weitere Rotation des Hauptkörpers blockiert. Der Träger wird somit in dem Nutzungszustand in einer stabilen vorgesehenen Position gehalten.

Um das Klappen von dem Stauzustand in den Nutzungszustand und das Halten in dieser Position zu unterstützen ist weiterhin bevorzugt ein Federelement zwischen dem ersten Hebel und dem Schiebfach angeordnet. Insbesondere ist das Federelement mit dem ersten Hebel zwischen dessen Anbindungspunkten gelenkig verbunden und ist in einem hinteren Bereich des Schiebfachs mit dessen Boden oder Seitenfläche gelenkig verbunden.

Die Federkraft drückt den ersten Hebel in Richtung Frontseite der Hygieneeinrichtung und unterstützt damit die Rotation in den Nutzungszustand, wobei sich das Federelement an dem Schiebfach abstützt. Im Nutzungszustand wird der Träger unterstützt durch die Federkraft in einer stabilen Position gehalten. Zum Zurückklappen in den Stauzustand muss die Federkraft überwunden werden. Das Federelement kann beispielsweise als Gasdruckfeder ausgestaltet sein.

Weiterhin betrifft die Erfindung ein Abfallsammelfahrzeug mit einer vorstehend beschriebenen Hygieneeinrichtung. Die Hygieneeinrichtung ist dabei vorzugsweise an einem Träger des Aufbaus des Abfallsammelfahrzeugs vorzugsweise schraubtechnisch montiert. Je nach Größe des Aufbaus ist die Hygieneeinrichtung unmittelbar an dem Träger befestigt. Die Rückwand des Rahmens kann dafür mit einem Lochbild für die Verschraubung versehen sein. Bei einem breiteren Aufbau wird ein Adapter verwendet um die Hygieneeinrichtung dennoch gut erreichbar für das Bedienpersonal anzubringen.

Bei dem Adapter kann es sich beispielsweise um ein Blechbiegeteil mit Anlageflächen für den Rahmen der Hygieneeinrichtung und den Träger handeln, das mit der Hygieneeinrichtung und dem Fahrgestell verschraubt wird.

Vorteilhafterweise sind die Anlageflächen für den Träger und/oder die Rückwand des Rahmens mit einem Lochbild versehen, das dem ohnehin vorhandenen Lochbild des Fahrgestellrahmens entspricht.

Weitere Merkmale der Erfindung ergeben sich aus den nachfolgend beschriebenen Figuren.

Es zeigen
- Figur 1: einen Aufbau eines Abfallsammelfahrzeugs mit einer erfindungsgemäßen Hygieneeinrichtung,
- Figur 2: eine Hygieneeinrichtung im Nutzungszustand mit ausgeklapptem Träger in perspektivischer Ansicht,
- Figur 3: eine Hygieneeinrichtung im Nutzungszustand mit eingeklapptem Träger in perspektivischer Ansicht,
- Figur 4: eine Hygieneeinrichtung im Nutzungszustand mit ausgeklapptem Träger in Seitenansicht,
- Figur 5: eine Hygieneeinrichtung im Nutzungszustand mit eingeklapptem Träger in Seitenansicht,
- Figur 6: eine Hygieneeinrichtung im Stauzustand in perspektivischer Ansicht,
- Figur 7: den Rahmen einer Hygieneeinrichtung in einer Schnittdarstellung,
- Figur 8: einen Aufbau eines Abfallsammelfahrzeugs mit einer Hygieneeinrichtung in Seitenansicht,
- Figur 9: eine Hygieneeinrichtung am Träger eines Aufbaus in Draufsicht.

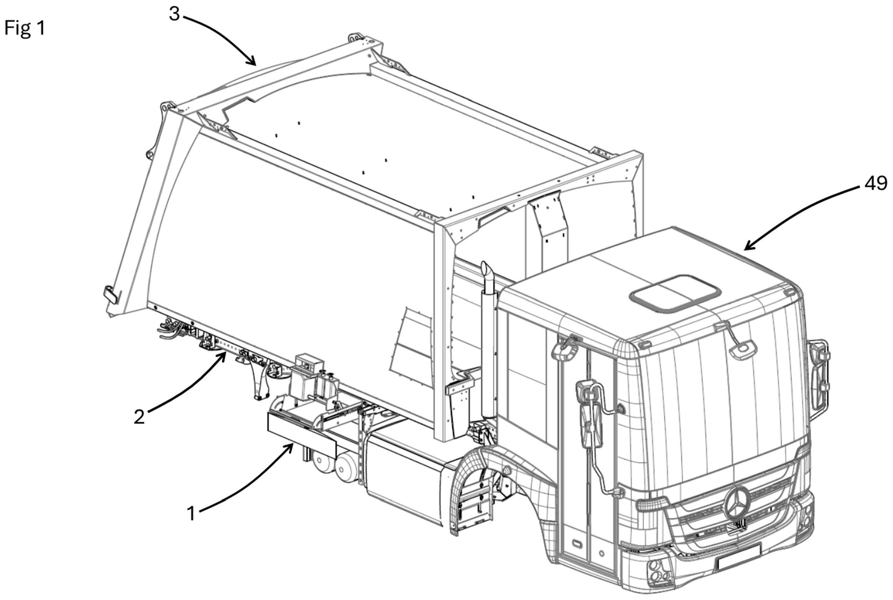

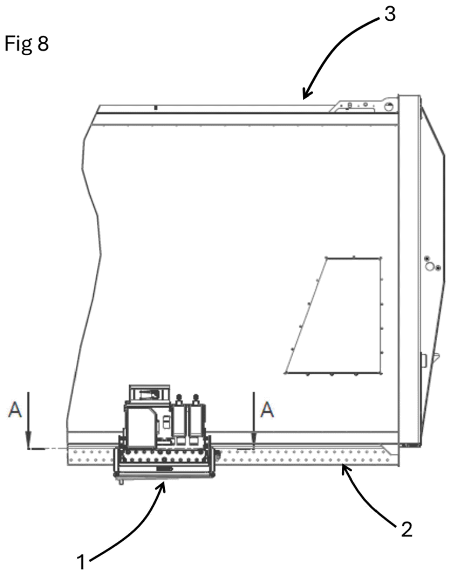

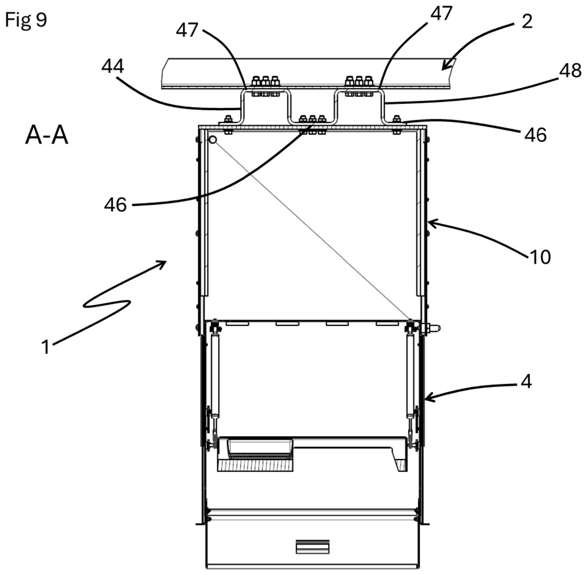

Die Hygieneeinrichtung 1 ist an einem Träger 2 des Aufbaus 3 eines Abfallsammelfahrzeugs befestigt. Fig. 1 zeigt diese Anordnung. Das Abfallsammelfahrzeug ist hier nicht vollständig dargestellt. Lediglich der Aufbau 3 und die Fahrerkabine 49 sind gezeigt. Der Aufbau 3 verfügt über an seiner Unterseite angeordnete Träger 2, an denen unterschiedliches Zubehör montiert werden kann. Details der Anbringung der Hygieneeinrichtung 1 werden weiter unten in Bezug auf Fig. 8 und 9 beschrieben.

Die Hygieneeinrichtung 1 ist seitlich des Fahrzeugs und gut zugänglich für das Bedienpersonal angeordnet. Da sich das Zubehör von Fahrzeug zu Fahrzeug unterscheidet, kann die Hygieneeinrichtung 1 dort angeordnet werden, wo sich genügend Bauraum findet. Dies wird dadurch erleichtert, dass die Hygieneeinrichtung 1 im Stauzustand sehr kompakt ist.

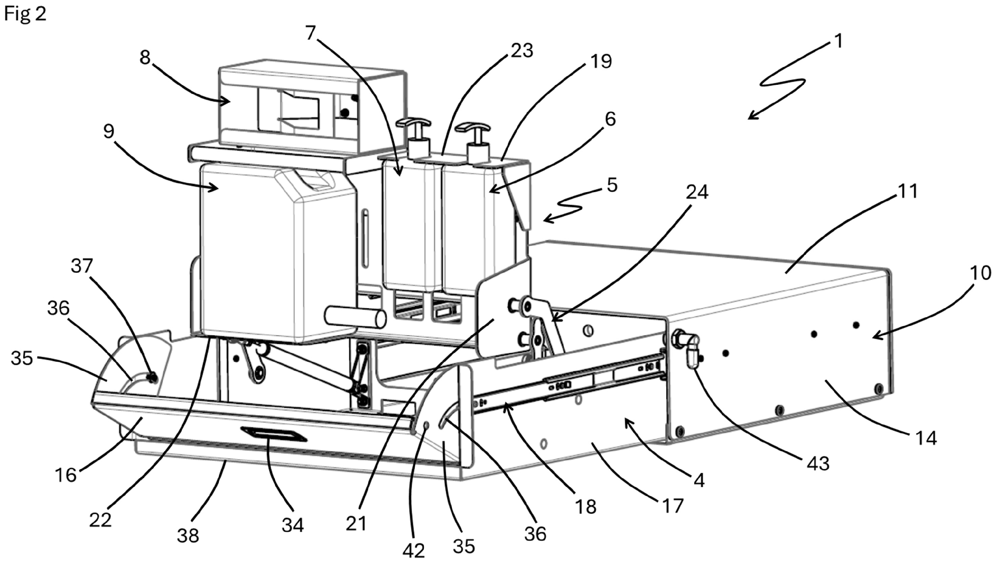

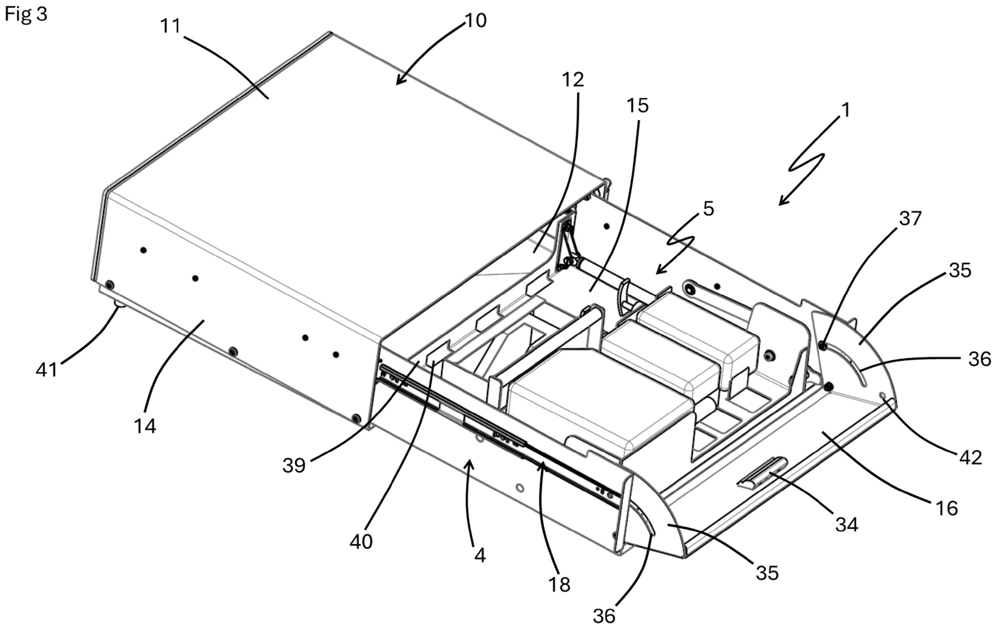

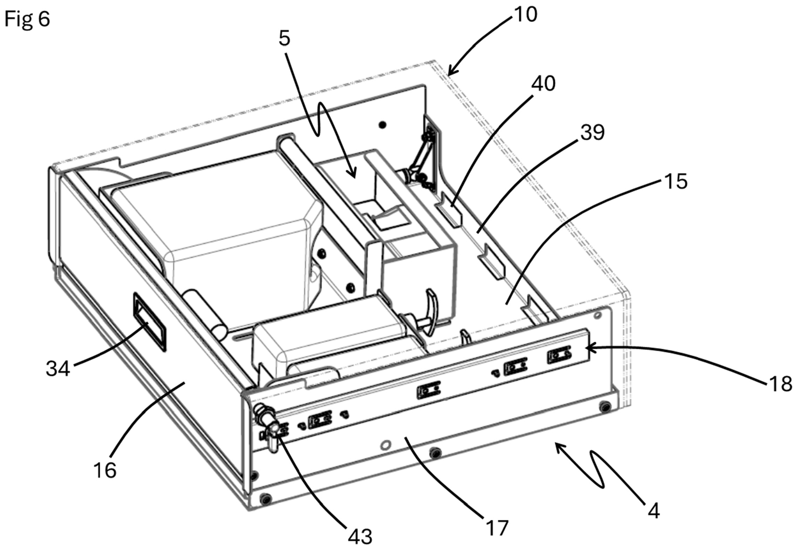

Bei Bedarf kann das Schiebfach 4 einfach herausgezogen werden und der Träger 5 mit den Hygieneelementen wird nach oben geklappt. In diesem Ausführungsbeispiel ist die Hygieneeinrichtung 1 mit einem Seifenspender 6, einem Desinfektionsmittelspender 7 sowie einem Handtuchspender 8 ausgestattet (Fig. 2). Unterhalb des Wasserreservoirs 9 ist genügend Freiraum, so dass das Bedienpersonal bequem Schmutz und Seife von den Händen waschen kann. Die Hygieneelemente und das Wasserreservoir 9 sind im Stauzustand mit eingeschobenem Schiebfach 4 ordentlich verstaut und können nicht verschmutzen oder beschädigt werden (Fig. 3 und 6). Die Hygieneelemente sind leicht entnehmbar und können bei Bedarf ausgetauscht oder erneuert werden. Es kann auch auf individuelle dermatologische Bedürfnisse des Bedienpersonals Rücksicht genommen werden.

Die Hygieneeinrichtung 1 umfasst einen Rahmen 10 mit einer Deckwand 11, einer Bodenwand 12, einer Rückwand 13 und diese verbindende Seitenwände 14 sowie ein Schiebfach 4 mit einem Boden 15 und von diesem nach oben abstehender Frontwand 16 und Seitenflächen 17. Das Schiebfach 4 ist in einem Stauzustand in dem Rahmen 10 angeordnet und in einem Nutzungszustand schubladenartig aus dem Rahmen 10 ausgezogen. Dazu sind zwischen dem Rahmen 10 und dem Schiebfach 4 Schienen 18 angeordnet.

In dem Schiebfach 4 ist ein Träger 5 klappbar angeordnet, so dass er sich in dem Stauzustand in einem Innenraum des Schiebfachs 4 befindet und in dem Nutzungszustand nach oben geklappt ist, so dass die an dem Träger 5 angeordneten Hygieneelemente benutzt werden können. Der Träger 5 umfasst zum einen einen Hauptkörper 19, der als Blechbiegebauteil ausgeformt ist. Der Hauptkörper 19 ist einstückig, so dass keine weiteren Fügeschritte bei der Herstellung notwendig sind. Der Hauptkörper 19 weist ein Rückenelement 20 und davon abgebogene Seitenelemente 21 auf, an denen Aufnahmen 23 für Hygieneelemente angebracht sind. Von dem Rückenelement 20, das Ausnehmungen zur Gewichtsersparnis aufweist, ist zudem eine Trägerfläche 22 für das Wasserreservoir 9 abgebogen. Die Trägerfläche 22 wird somit durch eine einfache Umformoperation gebildet und muss nicht separat angefügt werden.

Zum anderen umfasst der Träger 5 eine Hebelanordnung 24. Die Hebelanordnung 24 ihrerseits weist einen geraden ersten Hebel 25 und einen gebogenen zweiten Hebel 26 auf, die drehbar jeweils an einer Seitenfläche 17 und an den Seitenelementen 21 des Hauptkörpers 19 angeordnet sind. Ein Federelement 27, als Gasdruckfeder ausgeführt, das an dem ersten Hebel 25 und an dem Schiebfach 4 angeordnet ist, unterstützt das Hochklappen des Trägers 5.

Wenn eine Bedienperson den Träger 5 hochklappt, drückt die Federkraft den ersten Hebel 25 in Richtung Frontwand. Der gerade erste Hebel 25 überstreicht beim Klappen des Trägers 5 einen Kreissektor und bringt dabei den Träger 5 nicht nur in eine aufrechte Position, sondern bringt ihn auch in einen Abstand zu dem Schiebfach 4. Die Länge des ersten Hebels 25 ist dabei so gewählt, dass unterhalb des Hauptkörpers 19 und insbesondere des Wasserreservoirs 9 genügend Platz vorhanden ist, um die Handreinigung bequem durchzuführen.

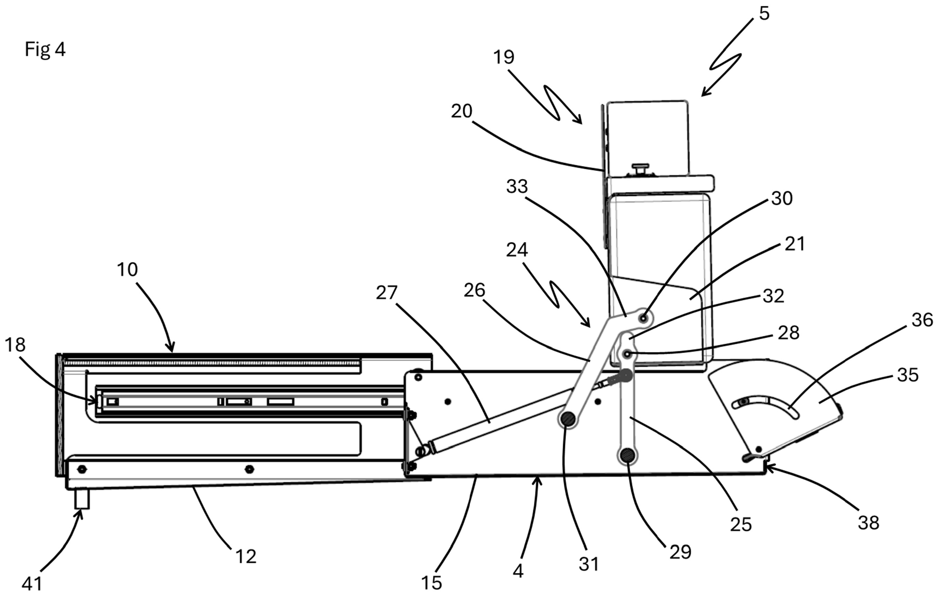

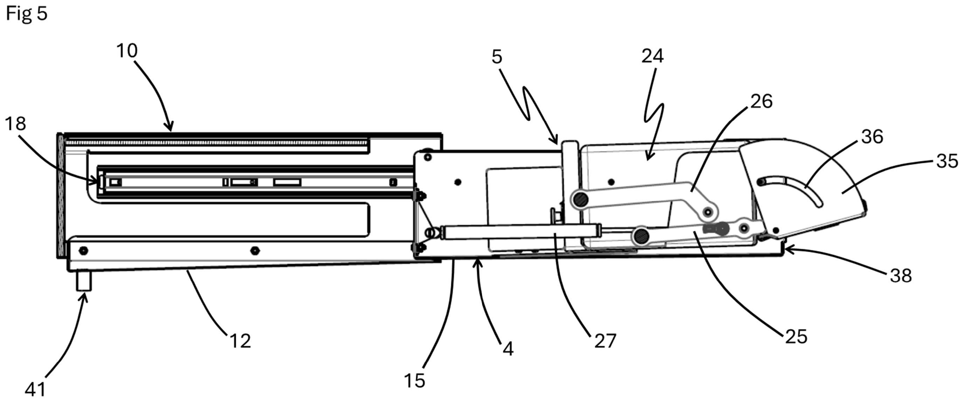

Der gebogene zweite Hebel 26 unterstützt während des Klappens die Rotation des Hauptkörpers 19 um den Anbindungspunkt 28 des ersten Hebels 25 an dem Hauptkörper 19 nach vorne und stützt den Träger 5 im Nutzungszustand nach hinten ab. Die Lage der einzelnen Komponenten in eingeklapptem und ausgeklapptem Zustand ist in den Fig. 4 und 5 gut zu erkennen, in denen eine Seitenwand 14 des Rahmens 10 in der Seitenansicht ausgeblendet ist.

Diese Bewegung wird durch die Lage der Anbindungspunkte 28, 29, 30, 31 der beiden Hebel 25, 26 ermöglicht. Bezogen auf Blickrichtung von einer Frontseite der Hygieneeinrichtung 1 liegt der Anbindungspunkt 31 des zweiten Hebels 26 an der Seitenfläche 17 oberhalb und hinter dem Anbindungspunkt 29 des ersten Hebels 25 und der Anbindungspunkt 30 des zweiten Hebels 26 an dem Hauptkörper 19 oberhalb und vor dem Anbindungspunkt 28 des ersten Hebels 25.

Durch diese Ausgestaltung wird nicht nur eine Klappbewegung ausgeführt, sondern gleichzeitig durch eine Hubbewegung des Trägers 5 ein komfortabler Freiraum darunter geschaffen.

Der erste Hebel 25 weist einen über seinen Anbindungspunkt 28 an dem Hauptkörper 19 hinausragenden Anschlagsabschnitt 32 auf, mit dem im Nutzungszustand ein Endabschnitt 33 das zweiten Hebels 26 in Anlage kommt. Dadurch wird die Bewegung der beiden Hebel 25, 26 zueinander gestoppt und eine weitere Rotation des Hauptkörpers 19 blockiert. Der Träger 5 wird somit in dem Nutzungszustand in einer stabilen vorgesehenen Position gehalten, was durch das Federelement 27 zusätzlich unterstützt wird. Beim Zurückklappen muss die Federkraft des Federelements 27 überwunden werden.

Die Frontwand 16 des Schiebfachs 4 ist ebenfalls beweglich ausgestaltet und kann mit einem Griff 34 nach vorne geklappt werden, wodurch der Innenraum des Schiebfachs 4 vergrößert wird und der Bereich unterhalb des Wasserreservoirs 9 leichter zugänglich wird. Die Frontwand 16 verfügt dazu über Seitenschwingen 35 die von der Frontwand 16 zu den Seitenflächen 17 weisend vorstehen. In den Seitenschwingen 35 sind Langlöcher 36 eingebracht, in denen als Schrauben ausgeführte und mit den Seitenflächen 17 verbundene Führungselemente 37 geführt werden. Die Enden der Langlöcher 36 dienen gleichzeitig als Anschlag, so dass die Frontwand 16 von den Führungselementen 37 im geöffneten Zustand gehalten wird.

In den Seitenschwingen 35 der Frontwand 16 sind außerdem Verriegelungslöcher 42 vorgesehen. Auch in den Seitenwänden 14 und Seitenflächen 17 sind derartige Löcher vorgesehen, die im Stauzustand fluchtend zueinander sind. Ein Bolzen einer Verriegelung 43 wird durch die Verriegelungslöcher 42 geführt, so dass sich im Stauzustand Rahmen 10 und Schiebfach 4 und auch die Frontwand 16 nicht durch Fahrzeugbewegungen gegeneinander verschieben. Dies vermeidet die Gefährdung von anderen Verkehrsteilnehmern oder Beschädigungen der Hygieneeinrichtung durch Stöße.

Der Boden 15 des Schiebfachs 4 wirkt als erste Auffangwanne für das entstehende Schmutzwasser. Damit das Schmutzwasser nicht nach vorne in Richtung der Bedienperson abläuft, ist die Vorderkante 38 des Bodens 15 aufgebogen. Der Boden 15 ist zudem so geformt, dass das Wasser in Richtung der hinteren Wand des Schiebfachs 4 abfließt. Die hintere Wand ist als vom Boden 15 abgebogene Lasche 39 ausgebildet (Fig. 3). Ausnehmungen 40 sind in dieser Lasche 39 und in dem Boden 15 eingebracht, so dass das Wasser an dieser Stelle aus dem Schiebfach 4 fließen kann.

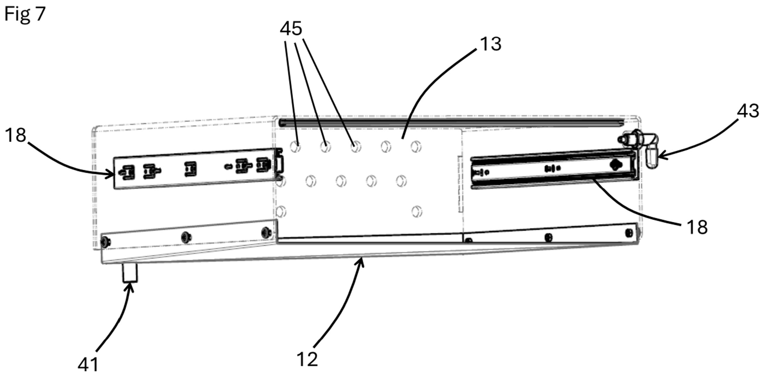

Es gelangt dabei in den Rahmen 10, dessen Bodenwand 12 ist ebenfalls so geformt, dass das Wasser in Richtung Rückwand 13 abfließt. Zum einen fällt die Bodenwand 12 nach hinten hin ab, wie in Fig. 4 gut zu erkennen ist. Zum anderen ist die Bodenwand 12 gekantet, so dass das Wasser gezielt in die aus Frontsicht hintere, linke Ecke des Rahmens 10 geleitet wird. Dort ist in der Bodenwand 12 ein Ablauf 41 angeordnet, durch den das Wasser ablaufen kann (siehe auch Fig. 7). Das Wasser fällt dann unterhalb des Abfallsammelfahrzeugs zu Boden und zwar so weit von den Bedienpersonen entfernt, dass diese nicht mit dem Schmutzwasser benetzt werden oder etwa entstehender Schlamm nicht weiter stört.

Die Bodenwand 12 des Rahmens 10 bildet eine zweite Auffangwanne, die im Nutzungszustand mit der ersten Auffangwanne zusammenwirkt, um das Abwasser aufzufangen und zu leiten.

Fig. 6 zeigt die Hygieneeinrichtung 1 im Stauzustand, wobei der Rahmen 10 ausgeblendet ist. Der Träger 5 findet seinen Platz vollständig im Innenraum des Schiebfachs 4, das in den Rahmen 10 eingeschoben ist. Der zur Verfügung stehende Raum ist optimal ausgenutzt, so dass die Hygieneeinrichtung 1 sehr kompakt ausgeführt ist.

Fig. 8 zeigt noch einmal die an einem Träger 2 des Aufbaus 3 angeordnete Hygieneeinrichtung 1 in einer Seitenansicht. Dabei ist das Lochbild des Trägers 2 zu erkennen, das zur schraubtechnischen Verbindung genutzt wird. Je nach Dimensionierung des Aufbaus 3 kann die Hygieneeinrichtung 1 unmittelbar oder über einen Adapter 44 an dem Träger 2 befestigt werden.

Für die direkte Verbindung ist in der Rückwand 13 ein Lochbild 45 vorgesehen, das der Lochanordnung des Trägers entspricht (Fig. 7).

Ist der Aufbau 3 breiter, kommt ein Adapter 44 wie in Fig. 9 gezeigt zum Einsatz. Bei dem Adapter 44 handelt es sich um ein Blechbiegeteil, das erste Anlageflächen 46 aufweist, die mit der Rückwand 13 des Rahmens in Anlage kommen. Zweite Anlageflächen 47 kommen mit dem Träger 2 in Anlage. In den Anlageflächen 46,47 sind ebenfalls Lochbilder vorgesehen, die zu den Lochbildern 45 des Rahmens 10 beziehungsweise des Trägers 2 passen.

Je nach Breite des Aufbaus 3 sind die Verbindungsabschnitte 48 von ihrer Länge her so ausgestaltet, dass die Hygieneeinrichtung 1 in einer gut zugänglichen Position für das Bedienpersonal an dem Träger 2 angeordnet werden kann. Durch die schraubtechnische Verbindung ist es sogar möglich, die Hygieneeinrichtung 1 bei Bedarf an einer anderen Stelle anzubringen.

### Bezugszeichen

- 1: Hygieneeinrichtung
- 2: Träger
- 3: Aufbau
- 4: Schiebfach
- 5: Träger
- 6: Seifenspender
- 7: Desinfektionsmittelspender
- 8: Handtuchspender
- 9: Wasserreservoir
- 10: Rahmen
- 11: Deckwand
- 12: Bodenwand
- 13: Rückwand
- 14: Seitenwand
- 15: Boden
- 16: Frontwand
- 17: Seitenfläche
- 18: Schiene
- 19: Hauptkörper von 5
- 20: Rückenelement von 19
- 21: Seitenelement von 19
- 22: Trägerfläche von 19
- 23: Aufnahme
- 24: Hebelanordnung
- 25: erster Hebel
- 26: zweiter Hebel
- 27: Federelement
- 28: Anbindungspunkt von 25
- 29: Anbindungspunkt von 25
- 30: Anbindungspunkt von 26
- 31: Anbindungspunkt von 26
- 32: Anschlagsabschnitt von 25
- 33: Endabschnitt von 26
- 34: Griff
- 35: Seitenschwinge
- 36: Langloch
- 37: Führungselement
- 38: Vorderkante von 15
- 39: Lasche
- 40: Ausnehmung
- 41: Ablauf
- 42: Verriegelungsloch
- 43: Verriegelung
- 44: Adapter
- 45: Lochbild
- 46: erste Anlagefläche
- 47: zweite Anlagefläche
- 48: Verbindungsabschnitt
- 49: Fahrerkabine

## Patentansprüche

1. Hygieneeinrichtung (1) umfassend einen Rahmen (10) mit einer Deckwand (11), einer Bodenwand (12), einer Rückwand (13) und diese verbindende Seitenwände (14),
ein Schiebfach (4) mit einem Boden (15) und von diesem nach oben abstehender Frontwand (16) und Seitenflächen (17), das in einem Stauzustand in dem Rahmen (10) angeordnet ist und in einem Nutzungszustand aus dem Rahmen (10) ausgezogen ist,
mit einem in dem Schiebfach (4) angeordneten Träger (5) mit einem Wasserreservoir (9) und zumindest einer Aufnahme für Hygieneelemente (6,7,8), der klappbar in dem Schiebfach (4) angeordnet ist, so dass der Träger (5) in dem Stauzustand in einem Innenraum des Schiebfachs (4) angeordnet ist und in dem Nutzungszustand nach oben geklappt ist.

2. Hygieneeinrichtung (1) nach Anspruch 1 **dadurch gekennzeichnet, dass** der Boden (15) des Schiebfachs (4) geformt ist, um eine erste Auffangwanne zu bilden.

3. Hygieneeinrichtung (1) nach Anspruch 2 **dadurch gekennzeichnet, dass** der Boden (15) des Schiebfachs (4) an seiner Vorderkante (38) aufgebogen ist.

4. Hygieneeinrichtung (1) nach Anspruch 2 oder 3 **dadurch gekennzeichnet, dass** die hintere Wand des Schiebfachs (4) als vom Boden (15) abgebogene Lasche (39) ausgebildet ist, und das Schiebfach (4) in der Lasche (39) benachbart zum Boden (15) und/oder im Boden (15) benachbart zur Lasche (39) Ausnehmungen (40) aufweist.

5. Hygieneeinrichtung (1) nach zumindest einem der vorstehenden Ansprüche **dadurch gekennzeichnet, dass** eine Frontwand (16) des Schiebfachs (4) klappbar ist, um den Innenraum des Schiebfachs (4) zu vergrößern.

6. Hygieneeinrichtung (1) nach zumindest einem der vorstehenden Ansprüche **dadurch gekennzeichnet, dass** die Bodenwand (12) des Rahmens (10) geformt ist, um eine zweite Auffangwanne zu bilden.

7. Hygieneeinrichtung (1) nach zumindest einem der vorstehenden Ansprüche **dadurch gekennzeichnet, dass** der Rahmen (10) im Bereich der Rückwand (13) in der Bodenwand (12) oder in der Rückwand (13) oder in einer Seitenwand (14) einen Ablauf (41) aufweist.

8. Hygieneeinrichtung (1) nach Anspruch 6 oder 7 **dadurch gekennzeichnet, dass** die erste Auffangwanne und die zweite Auffangwanne zusammenwirken, um Abwasser aufzufangen.

9. Hygieneeinrichtung (1) nach zumindest einem der vorstehenden Ansprüche **dadurch gekennzeichnet, dass** der Träger (5) einen Hauptkörper (19) und eine Hebelanordnung (24), um den Träger (5) vom Stauzustand in den Nutzungszustand zu klappen, aufweist.

10. Hygieneeinrichtung (1) nach Anspruch 9 **dadurch gekennzeichnet, dass** die Hebelanordnung (24) zumindest einen geraden ersten Hebel (25) und einen gebogenen zweiten Hebel (26) aufweist, die drehbar jeweils an einer Seitenfläche (17) und an dem Hauptkörper (19) angeordnet sind.

11. Hygieneeinrichtung (1) nach zumindest einem der Ansprüche 9 oder 10 **dadurch gekennzeichnet, dass** die Hebelanordnung (24) am Träger (5) an von einem Rückenelement (20) des Hauptkörpers (19) abgebogenen Seitenelementen (21) angeordnet ist.

12. Hygieneeinrichtung (1) nach zumindest einem der Ansprüche 10 oder 11 **dadurch gekennzeichnet, dass** im Nutzungszustand bezogen auf Blickrichtung von einer Frontseite der Hygieneeinrichtung (1) der Anbindungspunkt (31) des zweiten Hebels (26) an der Seitenfläche (17) oberhalb und hinter dem Anbindungspunkt (29) des ersten Hebels (25) liegt und der Anbindungspunkt (30) des zweiten Hebels (26) an dem Hauptkörper (19) oberhalb und vor dem Anbindungspunkt (28) des ersten Hebels (25) liegt.

13. Hygieneeinrichtung (1) nach zumindest einem der Ansprüche 10 bis 12 **dadurch gekennzeichnet, dass** der erste Hebel (25) einen über seinen Anbindungspunkt (28) an dem Hauptkörper (19) hinausragenden Anschlagsabschnitt (32) aufweist, mit dem im Nutzungszustand ein Endabschnitt (33) das zweiten Hebels (26) in Anlage kommt.

14. Hygieneeinrichtung (1) nach zumindest einem der Ansprüche 10 bis 13 **dadurch gekennzeichnet, dass** ein Federelement (27) zwischen dem ersten Hebel (25) und dem Schiebfach (4) angeordnet ist.

15. Abfallsammelfahrzeug mit einer Hygieneeinrichtung (1) nach zumindest einem der vorstehenden Ansprüche.
